# EUROPEAN PATENT SPECIFICATION

(11) **EP 3 245 808 B1**
(45) Date of publication and mention of the grant of the patent: **20.01.2021**
(21) Application number: 15825715.4
(22) Date of filing: 21.12.2015
(51) Int. Cl.: H04W 16/14, G06F 16/2458, G06F 16/9537

(54) **SYSTEMS, METHODS, AND DEVICES FOR LICENSED SHARED ACCESS MANAGEMENT WITH DISTRIBUTED INFORMATION STORAGE**
SYSTEME, VERFAHREN UND VORRICHTUNGEN ZUR LIZENZIERTEN GEMEINSAMEN ZUGANGSVERWALTUNG MIT VERTEILTER INFORMATIONSSPEICHERUNG
SYSTÈMES, PROCÉDÉS ET DISPOSITIFS DE GESTION D'ACCÈS PARTAGÉ SOUS LICENCE AVEC STOCKAGE D'INFORMATIONS DISTRIBUÉES

(30) Priority: 16.01.2015 US 201562104251 P; 18.12.2015 US 201514974507
(43) Date of publication of application: 22.11.2017
(73) Proprietor: Apple Inc., Cupertino, CA 95014 (US)
(72) Inventor: MUECK, Markus Dominik, 85579 Neubiberg (DE); AREFI, Reza, Great Falls, Virginia 22066 (US)
(74) Representative: Barnfather, Karl Jon
(86) International application number: PCT/US2015/066994
(87) International publication number: WO 2016/114905

(56) References cited:
- WO-A1-2012/164147
- WO-A2-2014/117135
- SOHUL MUNAWWAR M ET AL: "Quality of Service Assurance for Shared Spectrum Systems", 2014 IEEE MILITARY COMMUNICATIONS CONFERENCE, IEEE, 6 October 2014 (2014-10-06), pages 1471-1476, XP032686430, DOI: 10.1109/MILCOM.2014.243
- PARK JUNG-MIN ET AL: "Security and Enforcement in Spectrum Sharing", PROCEEDINGS OF THE IEEE, IEEE. NEW YORK, US, vol. 102, no. 3, 1 March 2014 (2014-03-01) , pages 270-281, XP011539980, ISSN: 0018-9219, DOI: 10.1109/JPROC.2014.2301972 [retrieved on 2014-02-14]

## Description

### Related Applications

This application claims the benefit under 35 U.S.C. § 1 19(e) of U.S.

Provisional Application No. 62/104,251, filed January 16, 2015, which is hereby incorporated by reference herein in its entirety.

### Technical Field

The present disclosure relates to shared spectrum networks, and more particularly to shared access management.

### Background

Shared spectrum licensing introduces a mechanism that enables operators of wireless communication networks to temporarily increase or decrease bandwidth according to need. Indeed, it is expected that not enough dedicated spectrum will be available for the operators of cellular communication networks in the future. The temporary increase or decrease of bandwidth may be had by licensing a portion of shared spectrum bandwidth on a short-term or long-term basis. One objective for developing shared spectrum licensing systems is to provide for the increased spectrum needs of some operators by providing the operators of cellular communication networks with access to additional licensed spectrum from other entities (e.g., public safety, government, other private licensees, etc.).

SOHUL MUNAWWAR M ET AL: "Quality of Service Assurance for Shared Spectrum Systems", 2014 IEEE MILITARY COMMUNICATIONS CONFERENCE, IEEE, 6 October 2014 (201 4-1 0-06), pages 1471 -1 476, XP032686430, discloses a database access management entity, DAME, according to the preamble of claim 1. WO 2012/164147 A1 discloses a spectrum sharing system, comprising a plurality of distributed repositories to receive and store information associated with usage of a shared frequency band by an incumbent user; a controller to control allocation of resources within the shared frequency band by an evolved universal terrestrial radio access network Node and an access management entity in combination with one or both of the controller and the plurality of distributed repositories, the access management entity to limit access by the controller to the information in the plurality of distributed repositories to prevent a level of knowledge of the incumbent user's usage of the shared frequency band.

WO 2014/117135 A2 discloses a similar spectrum sharing system.

Thus the prior art documents are concerned with avoiding interference with the incumbent transmission.

It is the aim of the present invention to avoid high-power emissions of the incumbent users.

This aim is achieved by the database access management entity according to claim 1, which defines the scope of protection of the invention. The dependent claims relate to special embodiments thereof.

### Brief Description of the Drawings

FIG. 1A is a block diagram of an end-to-end citizens broadband radio service architecture that may be adapted according to certain embodiments disclosed herein.
FIG. 1B is a block diagram of a system that illustrates integration and linkage of licensed shared access components to an example architecture according to certain embodiments disclosed herein.
FIG. 2A is a block diagram of a spectrum sharing system that may be adapted according to certain embodiments disclosed herein.
FIG. 2B is a block diagram of a spectrum sharing system with database access management according to certain embodiments.
FIG. 3 is a process diagram of an information management system according to one embodiment.
FIG. 4 is a block diagram of electronic device circuitry according to certain embodiments.
FIG. 5 is a flowchart of a process for licensed shared access management according to one embodiment.
FIG. 6 is a flowchart of a process for licensed shared access management according to one embodiment.

### Detailed Description of Preferred Embodiments

References in this specification to "an embodiment," "one embodiment," or the like, mean that the particular feature, structure or characteristic being described is included in at least one embodiment. Occurrences of such phrases in this specification do not necessarily all refer to the same embodiment.

Licensed shared access (LSA) was developed by the European Radio Spectrum Policy Group (RSPG) to propose a new way for answering to the mobile operators' desires for more spectrum. Indeed, it is expected that no more dedicated spectrum will be available for cellular operators for mobile communications in the future. In order to address this, LSA proposes mechanisms for introducing shared spectrum based solutions, for example mobile cellular operators will have access to additional licensed spectrum from other licensees such as public safety, government, and so on, to which mobile cellular operators normally would not get access. Another approach to shared spectrum is authorized shared access (ASA). ASA, however, is limited to International Mobile Telecommunications (IMT) spectrum whereas LSA also addresses non-IMT bands. LSA and ASA are currently only at the conceptual level. Another related technology is called cloud spectrum services (CSS), which addresses the same framework as LSA and ASA, but introduces more detailed implementation solutions.

The approaches of LSA/ASA/CSS introduce mechanisms for enabling mobile devices (MDs) to share spectrum under a licensed regime. For example, following the CSS concept, the spectrum may be allocated based on various time-scales, ranging from static up to a highly dynamic allocation of shared spectrum. One issue of spectrum sharing, however, lies in the fact that a primary user, typically, the spectrum owner, the incumbent, can choose to reclaim any of its spectrum at any time. Also, the primary users might want to be able to allocate any parts of the considered spectrum to their own services.

It is anticipated that various systems are candidate licensees of shared spectrum bands. For example, most cellular wide area radio communication technology may use shared spectrum. Such technologies may include, for example, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (e.g., UMTS (Universal Mobile Telecommunications System), FOMA (Freedom of Multimedia Access), 3GPP LTE (Long Term Evolution), 3GPP LTE Advanced (Long Term Evolution Advanced), and 4G LTE, 5G LTE, etc.), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System-Time-Division Duplex), TD-CDMA (Time Division-Code Division Multiple Access), TD-CDMA (Time Division-Synchronous Code Division Multiple Access), UTRA (UMTS Terrestrial Radio Access), E-UTRA (Evolved UMTS Terrestrial Radio Access)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as also referred to as 3GPP Generic Access Network, or GAN standard)), or the like.

In certain embodiments, any priority access license (PAL) user and/or general authorized access (GAA) user (and possibly even incumbents) in the spectrum access system (SAS) case, or an LSA licensee in the LSA case, may apply any of the below mentioned example radio access technologies (RATs). That is to say, the following description may detail example scenarios involving mobile devices (including PAL user devices for SAS, GAA user devices for SAS, LSA licensee user devices for LSA and incumbent users for any systems) operating according to certain 3GPP, notably LTE and LTE-A and LTE-Advanced Pro. It is understood that such example scenarios are demonstrative in nature, and accordingly may be similarly applied to other mobile communication technologies and standards, such as any Cellular Wide Area radio communication technology, which may include e.g., a 5th Generation (5G) communication systems, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (e.g. UMTS (Universal Mobile Telecommunications System), FOMA (Freedom of Multimedia Access), 3GPP LTE, 3GPP LTE-A), 3GPP LTE-Advanced Pro, CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 14), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP LTE Extra, LTE Licensed-Assisted Access (LAA), UTRA (UMTS Terrestrial Radio Access), E-UTRA (Evolved UMTS Terrestrial Radio Access), LTE Advanced (4G) (Long Term Evolution Advanced (4th Generation)), ETSI OneM2M, loT (Internet of things), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as also referred to as 3GPP Generic Access Network, or GAN standard)), Wireless Gigabit Alliance (WiGig) standard, mmWave standards in general (wireless systems operating at 10-90 GHz and above such as WiGig, IEEE 802.11ad, IEEE 802.11ay, etc.), etc. The examples provided herein are thus understood as being applicable to various other mobile communication technologies, both existing and not yet formulated, particularly in cases where such mobile communication.

On a regulatory level, particularly in Europe, there is significant interest in shared spectrum solutions such as LSA, ASA, and CSS. For example, The European Conference of Postal and Telecommunications Administration (CEPT) Working Group Frequency Management (WGFM) agreed to launch corresponding project teams in September of 2012. The European Telecommunications Standards Institute (ETSI) has also agreed on the set-up of a System Reference Document (SRDoc), which is the official way for ETSI to cooperate with regulatory bodies. This document will allow industry to officially provide inputs and requirements related to CEPT work on LSA/ASA/CSS. This SRDoc targets in particular the 2.3-2.4 GHz Band which is expected to be one of the most straightforward candidates for shared spectrum usage. Additional candidates for shared spectrum usage may include, for example, 3.8 GHz and 470-790 MHz in Europe and 3.5 GHz in the United States (US).

In the US, the Federal Communication Commission (FCC) introduced a SAS approach to spectrum sharing that is intended to be deployed in the 3550-3650 MHz band or 3550-3700 MHz band (either of which may be referred to herein as the 3.5 GHz band). This band, however, is currently used for shipborne naval radar systems of the US Navy and the Coast Guard, by other government entities (hereafter referred to as "federal incumbents" or "government incumbents"), by satellite systems, and/or by any other fixed ground-based equipment. Since the US DoD (Department of Defense) may not be willing to provide any relevant "incumbent's information" such as data on the radar usage, the position of naval boats, etc., that would make sharing of the band by commercial users possible, it may be required for commercial systems to collect corresponding information mainly through sensing mechanisms. Further, it is expected that for security reasons the DoD will not allow commercial stakeholders to obtain a full picture of military naval activities.

Thus, certain embodiments disclosed herein are directed to providing safe and secure storage of sensing data related to military naval radar activities (or use by other incumbents) in such a way that no commercial stakeholder is able to get a full picture of the military activities. Access to the sensing data may be allowed to the extent necessary to operate tier-2 and tier-3 users for the SAS (where incumbent users represent tier-1, and citizens broadband radio service provides priority access for tier-2 users and GAA for tier-3 users).

While certain examples provided herein are directed to the shipborne naval radar context, persons skilled in the art will recognize from the disclosure herein that disclosed embodiments may be applicable to many other cases in which it is useful to manage sensitive resource (e.g., spectrum) usage information (in particular (meta-)data related to resource access characteristics/measurements by incumbents). Further, while certain examples are directed to the 3.5 GHz context indicated in by the FCC, persons skilled in the art will recognized from the disclosure herein that the embodiments may become relevant for usage in other bands and/or regions, e.g., the 2.3-2.4GHz band in Europe for which the LSA scheme is developed.

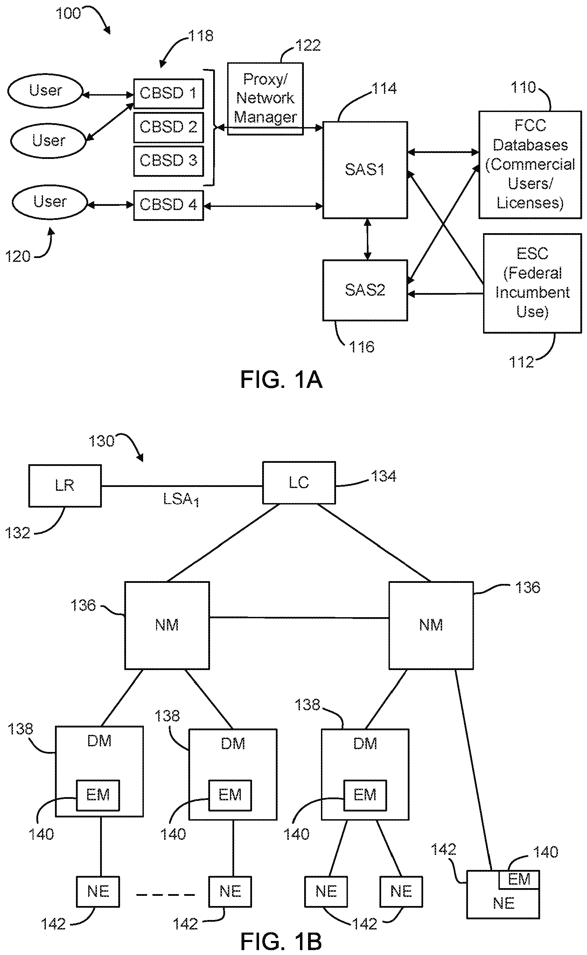

FIG. 1A is a block diagram of an end-to-end citizens broadband radio service architecture 100 that may be adapted according to certain embodiments disclosed herein. The illustrated architecture 100 corresponds to SAS functions proposed by the FCC for the 3.5 GHz band. The architecture 100 includes FCC databases 110 of commercial users and corresponding licenses, an environmental sensing capability (ESC) 112, a SAS 114 (SAS1), a SAS 116 (SAS2), a plurality of citizen broadband radio service devices (CBSD) 118 (four shown as CBSD 1, CBSD 2, CBSD 3, CBSD 4), and a plurality of users 120 (three shown).

The users 120 access a communication network through one or more CBSD 118 and, when granted permission from the SAS 114, use resources within the shared band. The CBSDs 118 may include, for example, an access point or base station such as an LTE Evolved Universal Terrestrial Radio Access Network (E-UTRAN) Node Bs (also commonly denoted as evolved Node Bs, enhanced Node Bs, eNodeBs, or eNBs). The CBSDs 118 may interface directly with the SAS 114 (as shown for CBSD 4), or a network of CBSDs 118 may interact with the SAS 114 through a proxy and/or network manager 122 (as shown for CBSD 1, CBSD 2, and CBSD 3). SAS-to-SAS synchronization (e.g., between the SAS 114 and the SAS 116) may be used for coordination even between CBSDs 118 that use different SAS providers.

The FCC databases 110 include information related to commercial users and corresponding licenses (e.g., site-based licensing information). The SAS 114 and the SAS 116 are capable of directly interfacing with the FCC databases to access information used for SAS operations. The ESC 112 is configured to detect the incumbent's signals in the shared band (e.g., radar system signals for the 3.5 GHz band). The SAS 114 uses input from the ESC 112 to direct the users 120 (e.g., priority access licensees and GAA users) to another portion of the shared band or, if necessary, to cease transmissions to avoid potential interference to the incumbent's systems (e.g., federal radar systems).

In certain embodiments, the ESC 112: is managed and maintained by a non-governmental entity; accurately detects federal frequency use in the 3550-3700 MHz band and adjacent frequencies; communicates information about detected frequency use to the SAS 114; maintains security of detected and communicated signal information; is available to respond to requests from authorized personnel for any information collected or communicated by the ESC 112; operates without any connectivity to any military or other sensitive federal database or system; does not store, retain, transmit, or disclose operational information on the movement or position of any federal system or any information that reveals other operational information of any federal system that is not required to effectively operate the ESC 112 and/or the SAS 114.

The SAS 114 coordinates operation within the shared band among and between the users 120 (e.g., priority access users, GAA users, and incumbent access users). The SAS 114 directs priority access users to change their frequencies of operation to protect incumbent user operations. To effectively coordinate priority access and GAA users in the shared band, the SAS 114 is responsible for authenticating and authorizing the CBSDs 118 in both tiers of service and ensuring that the CBSDs 118 operate within permissible technical parameters.

The SAS 114 is responsible for setting the maximum permissible power levels for the CBSDs 118 and authorizing the CBSDs 118 to operate over available frequencies in authorized locations. In place of the manual processes that have characterized some other frequency coordination regimes, the SAS 114 responds quickly to ensure effective coexistence between and among the three tiers of users in the band. As shown in FIG. 1A, the SAS 114 obtains information about registered or licensed commercial users in the band from the FCC databases 110 and information about federal incumbent users of the band from the ESC 112. The SAS 114 may also interact directly or indirectly through the proxy and/or network manager 122 with the CBSDs 118 operating in the band to ensure that citizens broadband radio service users operate in a manner consistent with their authorizations and promote efficient use of the spectrum resource.

In certain embodiments, the SAS 114 performs at least the following functions: determine the available frequencies at a given geographic location and assign them to the CBSDs 118; determine the maximum permissible transmission power level for the CBSDs 118 at a given location and communicate that information to the CBSDs 118; register and authenticate the identification information and location of the CBSDs; enforce exclusion and protection zones, including any future changes to such zones, to provide compatibility between citizens broadband radio service users and incumbent federal operations; communicate with the ESC 112 and provide that the CBSDs 118 operate in a manner that does not interfere with federal users; provide that the CBSDs 118 protect non-federal incumbent users; protect priority access licensees from impermissible interference from other citizens broadband radio service users; facilitate coordination between GAA users to promote a stable spectral environment; provide secure and reliable transmission of information between the 114 SAS, the ESC 112, and the CBSDs 118; provide an approved ESC 112 with any sensing information reported by the CBSDs 118 if available; protect grandfathered wireless broadband licensees until the end of the grandfather period; and facilitate coordination and information exchange between the SASs 114, 116.

In certain embodiments, the SAS 114 may provide services for different operators of the CBSDs 118. For example, CBSD 1, CBSD 2, and CBSD 3 may correspond to a first commercial operator, while CBSD 4 may correspond to a second commercial operator. Thus, the SAS 114 has access to detailed communication information of both the first and second commercial operators. In practice, sharing this information with an entity outside of its control might not be acceptable to the first commercial operator and/or the second commercial operator.

Further, no information management approach currently exists for protecting commercial sensing information potentially obtained on activities of the federal incumbents (or any other incumbent whose resource usage activity should remain confidential). In state-of-the-art solutions, it is expected that the incumbent requirements may be extremely stringent, which probably allows only for very basic sensing features. It can thus be doubted that the SAS system will be able to operate suitably in a context where incumbent data is hardly available. Thus, according to certain embodiments, joint access control includes distributed sensing databases or repositories to provide that data is accessed in a way that allows the SAS 114 to function while no commercial operator or other stake-holder is able to obtain a full picture of the activities of the federal incumbents operating in the band (or any other incumbent whose resource usage activity should remain confidential).

In certain embodiments, the SAS and/or LSA system may be integrated into the 3GPP SA5 architecture. For example, FIG. 1B is a block diagram of a system 130 that illustrates integration and linkage of LSA components to 3GPP SA5 architecture according to one embodiment. The system 130 includes an LSA repository (LR) 132 in communication with an LSA controller 134 through an LSA₁ interface. The system 130 further includes one or more network manager (NM) 136 in communication with the LC 134. Each NM 136 is in communication with one or more domain manager (DM) 138 and/or a network element (NE) 142 comprising an element manager (EM) 140. Each (EM) 140 manages one or more NE 142.

The NMs 136 provide a package of end-user functions with the responsibility for the management of a network, mainly as supported by the EM(s)140, but it may also involve direct access to one or more NE 142. In certain embodiments, all communication with the network is based on open and well-standardized interfaces supporting management of multi-vendor and multi-technology NEs 142. The DMs 138 provide element management functions and domain management functions for a sub-network. Inter-working domain managers provide multi-vendor and multi- technology network management functions. The EMs 140 provide a package of end-user functions for management of a set of closely related types of network elements. In certain embodiments, these functions can be divided into two main categories: element management functions and sub-network management functions. The NEs 142 corresponds to a discrete telecommunications entity, which can be managed over a specific interface, e.g., a radio network controller (RNC).

While FIG. 1B shows the possible connection of the LC 134 to the 3GPP SA5 architecture, persons skilled in the art will recognize from the disclosure herein that similar approaches are possible for the SAS (private) controller. Further, a similar approach for connecting LSA and/or SAS entities to network architectures can be applied to any other system architecture.

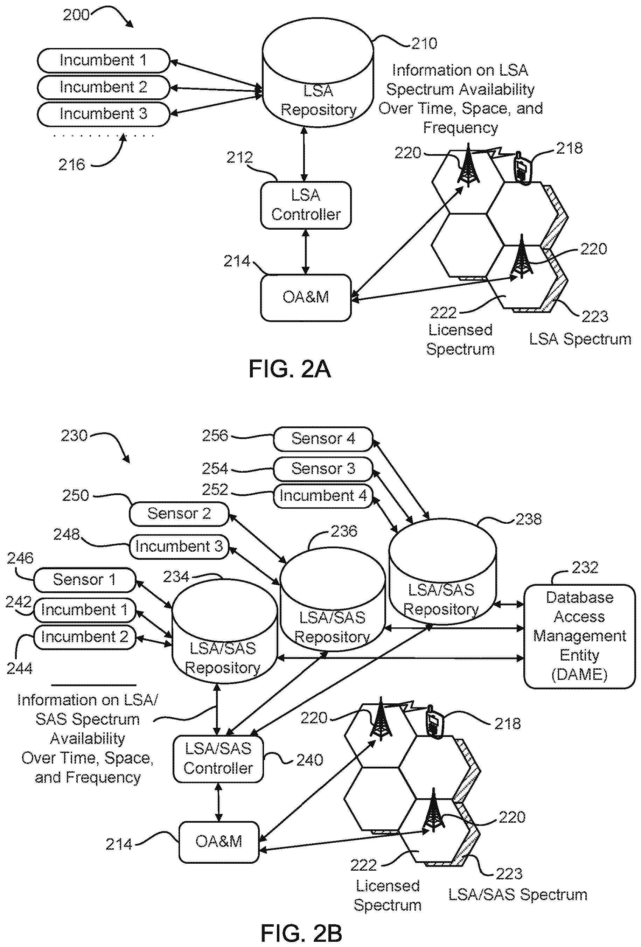

FIG. 2A is a block diagram of an spectrum sharing system 200 that may be adapted according to certain embodiments disclosed herein. The spectrum sharing system 200 includes an LSA repository 210, an LSA controller 212, and an operations, administration and management (OA&M) function 214. The example shown in FIG. 2A may be used for LTE embodiments wherein a user equipment (UE) 218 may connect to one or more eNB 220 (two shown) to communicate using resources allocated in a licensed spectrum 222. The OA&M function 214 may comprise, for example, an operations and maintenance (O&M) function in an evolved packet core (EPC) of an LTE system.

Under the direction of the LSA controller 212 through the OA&M 214, the one or more eNB 220 may, at times, allocate resources to the UE 218 within an LSA spectrum 223. The LSA repository 210 may comprise a database that is in communication with a plurality of incumbent users 216 (shown as Incumbent 1, Incumbent 2, and Incumbent 3). The LSA repository 210 receives and stores information from the incumbent users 216 on the availability of the LSA spectrum 223 over time, space, and frequency. The LSA controller 212 uses the information stored in the LSA repository 210 to control, through the OA&M 214 and the one or more eNB 220, when the UE 218 may be allocated resources within the LSA spectrum 223.

While the example shown in FIG. 2A is directed to an LTE example (e.g., using LSA in the 2.3-2.4 GHz band), it should be noted that the LSA concept is not limited to LTE or a specific frequency band. Rather, it is expected that the 2.3-2.4 GHz band (i.e., an LTE band) will represent a first stage of LSA usage. LSA will then subsequently be applied to further frequency bands, probably requiring a higher degree of dynamicity.

As discussed above, the FCC in the US introduced a SAS approach in the 3.5 GHz band incorporating a dynamic database (or repository) and, potentially, other interference mitigation techniques. The SAS would help provide that citizens broadband service users operate only in areas where they would not cause harmful interference to incumbent users and could also help manage interference protection among different tiers of citizens broadband service users. Three tiers of service include incumbent access, priority access, and GAA. In this context, the entities in FIG. 2A may be renamed from "LSA Repository" to "SAS Repository", and from "LSA Controller" to "SAS Controller" or similar.

While the basic FCC concept relies on the idea that the incumbent users 216 provide data on spectrum occupancy (i.e., level of spectrum usage over time, space and frequency), similar to the LSA concept, military stakeholders (or any incumbent operating confidential/critical systems) may prefer a sensing based provision of data related to the resource usage by the incumbent users 216. Thus, as described in FIG. 1A with respect to the ESC 112, the example in FIG. 2A may not only allow the incumbent users 216 to provide data into the LSA repository 210, but may also provide (distributed) sensing nodes according to certain embodiments. In addition, or in other embodiments, whenever information directly provided by the incumbent users 216 is available, there is a preference or priority for the incumbent's direct information over the sensing data (since the incumbent's direct data may be considered to be more reliable).

It is expected that a single database (e.g., the LSA repository 210) covering a large part of a country or region will not be acceptable by the federal incumbents or other incumbents. Such a database could, for example, provide detailed insight to a commercial stakeholder on precise military activities and the usage of the radar systems. To alleviate this problem, according to certain embodiments, the LSA repository 210 is distributed and linked to a database access management entity (DAME). The DAME controls access to the information in the distributed LSA repository 210. The DAME controls access such that no overall picture or view of the incumbent users' activities can be obtained by a commercial stakeholder. In certain embodiments, the incumbent users 216 request or require some certainty on the correct operation of the DAME. In certain military cases, for example, the DAME may be operated or at least monitored by military personnel or their corresponding military contractors/representatives. The DAME entity may be a stand-alone entity in the overall LSA/SAS system as illustrated in FIG. 2B. Alternatively, the DAME entity may be integrated into any of the other LSA/SAS system entities, such as the LSA/SAS controller. Alternatively, the DAME entity may be integrated into the 3GPP SA5 architecture and/or be connected to one or more entities of the 3GPP SA5 architecture.

FIG. 2B is a block diagram of a spectrum sharing system 230 with database access management according to certain embodiments. Note that "LSA" represents the European spectrum sharing framework and may be replaced herein by "SAS" for the US context (e.g., in the 3.5 GHz band). Thus, for purposes of discussion herein, "LSA/SAS" may be used to reference either an LSA or an SAS embodiment. The spectrum sharing system 230 includes a DAME 232 in communication with a plurality of LSA/SAS repositories (three shown as LSA/SAS repository 234, LSA/SAS repository 236, LSA/SAS repository 238). In certain embodiments, the DAME 232 is under the control of an incumbent (e.g., a federal incumbent including DoD, military naval services, etc.) or a commercial stakeholder.

The spectrum sharing system 230 also includes an LSA/SAS controller 240 that is in communication with, and accesses data from, the plurality of LSA/SAS repositories (LSA/SAS repository 234, LSA/SAS repository 236, LSA/SAS repository 238). For example, the LSA/SAS controller 240 may send a request for data to the LSA/SAS repository 236, and if authorized by the DAME 232, receive the requested data from the LSA/SAS repository 236. In addition, or in other embodiments, the LSA/SAS controller 240 is in direct communication with the DAME 232 such that the LSA/SAS 240 sends requests for data to the DAME 232, which feeds the requests to a corresponding LSA/SAS repository 234, 236, 238.

Each LSA/SAS repository 234, 236, 238 may comprise a database that is in communication with one or more incumbent users and/or one or more sensors. By way of example, as shown in FIG. 2B: the LSA/SAS repository 234 is in communication with a first incumbent 242 (Incumbent 1), a second incumbent 244 (Incumbent 2), and a first sensor 246 (Sensor 1); the LSA/SAS repository 236 is in communication with a third incumbent 248 (Incumbent 3) and a second sensor 250 (Sensor 2); and the LSA/SAS repository 238 is in communication with fourth incumbent 252 (Incumbent 4), a third sensor 254 (Sensor 3), and a fourth sensor 256 (Sensor 4). Each incumbent and/or sensor provides information on LSA/SAS spectrum availability over time, space, and frequency to its respective LSA/SAS repository 234, 236, 238. In certain embodiments, the sensors 246, 250, 254, 256 may be part of an ESC, such as the ESC 112 shown in FIG. 1A. Similarly, the LSA/SAS repositories 234, 236, 238 may be part of an ESC, an FCC database, or a combination of an ESC (e.g., the ESC 112 shown in FIG. 1A) and an FCC database (e.g., the FCC databases 110 shown in FIG. 1A).

Note that the above approach can be implemented as a hierarchy, in particular a hierarchy of database components. For example, a first-hierarchy-level database (LSA/SAS repository) may have direct access to the LSA/SAS controller (or LSA/SAS entity) while a second-hierarchy-level database (LSA/SAS repository) may have a direct connection to the first-hierarchy-level database (LSA/SAS repository) for indirect access to the LSA/SAS controller, etc. In this sense, any number of hierarchy levels and any level of hierarchy is possible. Example SA5 entities and corresponding functions are discussed above with respect to FIG. 1B, and include a network manager (NM), a domain manager (DM), and an element manager (EM).

In one embodiment, the plurality of LSA/SAS repositories 234, 236, 238 are operated by a single (e.g., commercial, military, military contractor, or other) stakeholder. Through control of the DAME 232, according to certain embodiments, even the operating stakeholder only has a pre-defined level of access to the information in the LSA/SAS repositories 234, 236, 238.

In another embodiment, the plurality of LSA/SAS repositories 234, 236, 238 are operated by two or more different (e.g., commercial, military, military contractor, or other) stakeholders. In certain such embodiments, each stakeholder is responsible for managing information of a fraction of a geographic area, a fraction of the concerned spectrum band, and/or a fraction of a pre-defined time period. In this way, no single stakeholder's system has full knowledge of the overall available information, which provides additional security on top of the access management provided by the DAME 232. The incumbents 242, 244, 248, 252 may provide pre-defined sensing, measuring, and/or storing rules to each LSA/SAS repository 234, 236, 238.

The rules may include an indication of which time slots are measured and for which subsequently related information is stored. For example, in case of three available database providers, each measurement interval of one minute may be split into three time periods of 20 seconds each such that a first provider is responsible for the first 20 seconds, a second provider is responsible for the next 20 seconds and a third provider is responsible for the final 30 seconds. The rules may also include an indication of which geographic areas are monitored. For example, when three database providers deploy their equipment in proximity to one another, there may be an angular directional split in a two-dimensional (2D) model, i.e., the first provider measures and stores observations in the direction of an angle of 0-120 degrees, the second provider measures and stores observations in the direction of an angle of 120-240 degrees, and the third provider measures and stores observations in the direction of an angle of 240-360 degrees). The rules may also include an indication of which spectrum band is monitored. For example, when three database providers deploy their equipment in proximity to one another, there may be a spectrum band split, i.e., in case of the 3.55-3.65 GHz band the first provider measures and stores observations in 3.55-3.58 GHz, the second provider measures and stores observations in 3.58-3.62 GHz, and the third provider measures and stores observations in 3.62-3.65 GHz.

In one embodiment, the LSA/SAS controller 240 requests information on spectrum availability by accessing one or more of the distributed LSA/SAS repositories 234, 236, 238. The LSA/SAS controller 240 may contact, for example, those repositories 234, 236, 238 that are in the proximity of the concerned shared spectrum usage area. The OA&M 214 and/or base stations, such as the eNBs 220 shown in FIG. 2B, may include information regarding the usage area of the concerned shared spectrum with respect to the UE 218. The LSA/SAS repositories 234, 236, 238 contacted by the LSA/SAS controller 240 inform the DAME 232 of the request and the originator of the request. The DAME 232 may respond by authorizing access to the requested information, based on authorization rules. The DAME 232 may allow the delivery of the requested information, restrict the information to be provided to a subset of the requested information, or prohibit any delivery of the requested information. Thus, according to the decision of the DAME 232, the requested information is either provided as requested, partly provided, or the delivery is rejected.

In certain embodiments, the decisions of the DAME 232 are based on the following principles or rules. The DAME 232 considers the amount of information given to the source of the requests (e.g., an MNO (mobile network operator)). If, for example, the source of the request has no (or very little) information on the current state of a federal incumbent's movements and/or radar usage, the DAME 232 may grant access to the requested information. If, however, the source of the request already has some information, the DAME 232 may restrict the information to be provided to a strict minimum or may reject providing any information.

In certain embodiments, the DAME 232 maintains a "level of trust" which depends on the source of the request (e.g., an MNO). A highly trusted source may be granted access to more detailed information compared to a less trusted source. For a given tier-2 or tier-3 spectrum licensee (or LSA licensee in the context of LSA), the level of trust may be defined in certain embodiments as follows. The level of trust may be pre-defined by the incumbent. For example, the level of trust may depend on sharing agreement details between incumbents and licensees, guarantees given by a licensee on the correct operation of the DAME 232, a history of a working/trust relationship between an incumbent and a licensee, a possibility of access of information to foreign/international stakeholders, and other trust factors.

For a tier-2 licensee (such as an MNO, in the context of SAS or an LSA licensee in the context of LSA), the level of trust may depend on a licensing agreement and the level of guarantees related to information confidentiality defined in a sharing agreement. A spectrum sharing system operated by a tier-2 licensee may, for example, have access to more detailed incumbents' information than that of a tier-3 licensee. Similarly, for a tier-3 licensee (such as a sporadic user), the level of trust may be low as compared to a tier-3 licensee and access to incumbents' information may be limited in typical cases.

In certain embodiments, the DAME 232 decides on the provision of new information based on the remaining relevance of information that has been provided in the past. Thus, in case the past information has no relevance any more (e.g., due to a federal incumbent's movements, etc.), new information may be provided more freely. On the other hand, in case the past information still has relevance (e.g., due to stations of the federal incumbent remaining in a given position for a period of time, etc.), new information may be provided more carefully. That is to say, to prevent the recipient of the information from having an overall picture of the incumbents' system configuration, only selected partial information or only long-term statistics (which do not provide much information on the latest configuration), etc. may be provided, or no information may be provided. A blunt rejection of providing data is corresponding to information itself. For example, a refusal to provide any information may indicate a high level of incumbents' activities in a given area. Thus, certain embodiments randomize rejection (e.g., sporadic rejection of providing data, sporadic provision of small subsets of available data, etc.) so no pattern may be extracted from the responses of the DAME 232.

In certain embodiments, in response to requests from one or more LSA/SAS controller(s), the DAME 232 allows or restricts access to information as follows.

The DAME 232 may allow full provision of data from a given repository (e.g., one of the LSA/SAS repository 234, 236, 238) the in the distributed database system. The LSA/SAS controller 240 requests information on available spectrum in a given area and the information is provided (e.g., in the form of a spectrum availability map or other data format) for a large area. The area may include, for example, the entire geographic area for which the target repository has available information.

The DAME 232 may provide a low level of restricted access to information. The LSA/SAS controller 240 requests information on available spectrum in a given area and the information is provided (e.g., in the form of a spectrum availability map or other data format) for a restricted area. The restricted area may include, for example, only the immediate proximity of the concerned LSA/SAS controller and the devices it manages.

The DAME 232 may provide some medium level of restricted access to information. The LSA/SAS controller 240 requests information on available spectrum in a given area. Instead of providing a specific spectrum availability map (e.g., including details related to the sensing characteristics of one or more of the sensors 246, 250, 254, 256), the LSA/SAS repositories 234, 236, 238 only answer with a YES/NO indication upon the request to indicate whether spectrum is available in a very specific area. The operation territory may be split into a multitude of small elements (e.g., squares or rectangles) and the DAME 232 only provides YES/NO triggers for up to a maximum number of element requests. The maximum number of elements is a system design parameter that may be agreed to, for example, by the federal incumbents.

The DAME 232 may provide a higher level of restricted access to information. The LSA/SAS controller 240 requests information on available spectrum in a given area. In response, the DAME 232 identifies that the LSA/SAS controller 240 already has substantial information over some areas and may decide not to provide further information on those areas known to the LSA/SAS controller 240 (or only very little additional information). In addition, or alternatively, the DAME 232 may decide to provide information on those areas on which the concerned LSA/SAS controller 240 has little knowledge. Also, if the LSA/SAS controller 240 requests information on large geographic areas, possibly leading to a full picture of the federal incumbents movements or operation, the DAME 232 may only grant delivery of information for a restricted geographic area (e.g., in the proximity of the concerned LSA/SAS controller) or may identify the concerned LSA/SAS controller for more detailed examination.

In certain embodiments, information on available spectral resources delivered to the LSA/SAS controller 240, instead of being in the form of a spectrum availability map with varying level of details, is provided in the form of specific answers to specific requests for spectral resources or channels. If the access to a specific channel is rejected, the LSA/SAS controller 240 sends a request for another channel based on a randomized process. Thus, no information may be extracted on future availability based on previous data.

In one embodiment, the LSA/SAS controller 240 randomly selects one channel from among an available set of channels and sends a request to the corresponding LSA/SAS repository (or directly to the DAME 232) to allow usage of the selected channel. The available set of channels may be pre-defined by an incumbent, or alternatively, may be communicated by request from one or more of the LSA/SAS repositories 234, 236, 238 (e.g., upon request, at a first association, or through a push mechanism). The available set of channels may also be communicated directly by the DAME 232 (e.g., upon request, at a first association, or through a push mechanism that may for example distribute updated information if a change occurs). If the usage request is granted, the LSA/SAS controller 240 triggers the usage of the channel. If, however, the usage request in not granted, the LSA/SAS controller 240 picks another channel randomly and reiterates the process until a channel to be used is found or all relevant channels turn out to be unavailable to the licensee (e.g., tier-2 or tier-3 users).

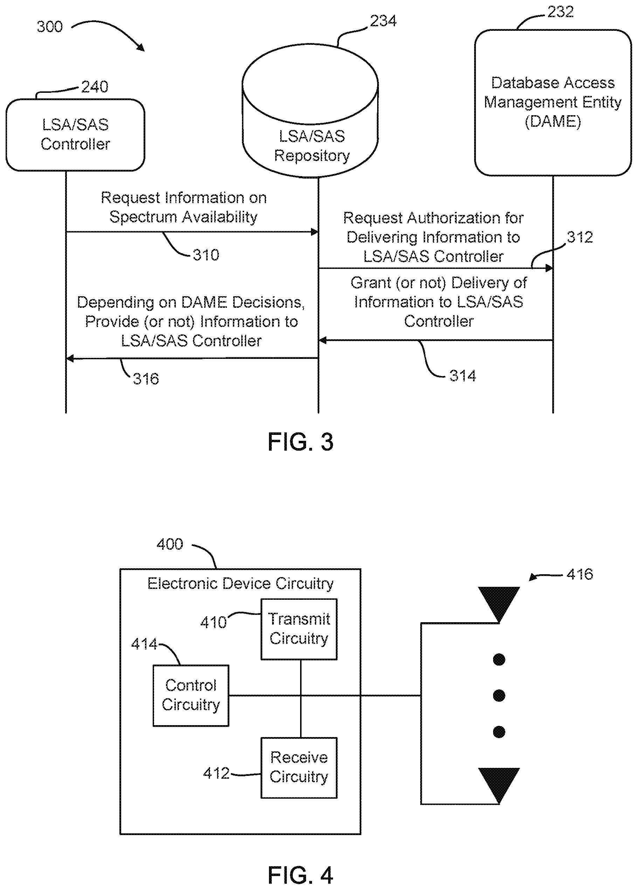

FIG. 3 is a process diagram of an information management system 300 according to one embodiment. Similar to the example shown in FIG. 2B, the information management system 300 includes a DAME 232, an LAS/SAS repository 234, and an LSA/SAS controller 240. In summary, the process shown in FIG. 3 includes the LSA/SAS controller 240 sending a message 310 to request information on spectrum availability, the LSA/SAS repository 234 responding to the message 310 by sending a message 312 to the DAME 232 to request authorization for delivering information to the LSA/SAS controller 240, the DAME 232 replying to the LSA/SAS repository 234 with a message 314 to grant (or not) delivery of information to the LSA/SAS controller 240, and the LSA/SAS repository 234 sending a message 316 to provide (or not), depending on the DAME's decision, information to the LSA/SAS controller 240.

In certain embodiments, the DAME 232 is managed in the LSA/SAS system domain, i.e., by commercial stakeholders. In other embodiments, the DAME 232 is managed by the federal incumbent stakeholders to ensure a maximum level of security and reliability of the information management.

The decision by the DAME 232 of whether or not to grant delivery of information may depend on previous requests by the LSA/SAS controller 240 (or group of LSA/SAS controllers or other sources or stakeholders) to various LSA/SAS repositories. The history of information delivery to a given LSA/SAS controller 240 (or group of LSA/SAS controllers or other sources or stakeholders) may either be stored in the concerned LSA/SAS databases/repositories or stored in the DAME 232.

If the history is stored in the concerned LSA/SAS databases/repositories, for example, each database/repository keeps track of which information has been provided to whom (which LSA/SAS controller or group of LSA/SAS controllers or other sources or stakeholders) and when (i.e., date (such as year, month, day), time (such as hour, minute, second)).

If the history is stored in the DAME 232, for example, the DAME 232 is contacted by the concerned LSA/SAS databases/repositories with an inquiry whether the requested information can be provided to the concerned LSA/SAS controller 240 (or group of LSA/SAS controllers or other sources or stakeholders). The DAME 232 can thus check the internal history tracking of which information has been provided to whom (which LSA/SAS controller or group of LSA/SAS controllers or other sources or stakeholders) and when (i.e., date (such as year, month, day), time (such as hour, minute, second)) by contacting the concerned databases and to request the history on the delivered information.

In other embodiments, a hybrid solution provides that part of the inquiry history data is stored in the DAME 232 and part of it is stored in the concerned LSA/SAS databases/repositories. In such an embodiment, the DAME 232 contacts the concerned LSA/SAS databases/repositories to request missing information on which information has been provided to whom (which LSA/SAS controller or group of LSA/SAS controllers or other sources or stakeholders) and when (i.e., date (such as year, month, day), time (such as hour, minute, second)).

In certain embodiments, an objective is to prevent the LSA/SAS controller 240 or group of LSA/SAS controllers or other sources or stakeholders from having a global picture of the activities (such as resource usage over time, space and frequency) of the concerned incumbent. For example, if the DAME 232 identifies that detailed information on the incumbents' resource usage in a given geographic area/time/spectrum band has been delivered to an LSA/SAS controller 240 or group of LSA/SAS controllers or other sources or stakeholders, then the DAME 232 may not grant further delivery of information (or alternatively, only information of a low confidentiality level may be provided by the concerned LSA/SAS repositories/databases to the issuer of the request). Only after a given time period, e.g., when the previously provided information has become obsolete, the DAME 232 grants that new information may again be provided. Such a situation may force the commercial LSA/SAS system to not use some or all of the spectrum sharing resources in the concerned area (e.g., where no more information is given on the incumbents' usage of resources) or to reduce the level of available resources.

As another example, if the DAME 232 identifies that some information on the incumbents' resource usage in a given geographic area/time/spectrum band has been delivered to an LSA/SAS controller 240 or group of LSA/SAS controllers or other sources or stakeholders, then the DAME 232 may decide to reduce the level of access to further information (or alternatively, only information of a lower confidentiality level may be provided by the concerned LSA/SAS repositories/databases to the issuer of the request).

As yet another example, if the DAME 232 identifies that only very little information or no information on the incumbents' resource usage in a given geographic area/time/spectrum band has been delivered to an LSA/SAS controller 240 or group of LSA/SAS controllers or other sources or stakeholders, then the DAME 232 may decide to reduce the level of access to further information (depending on the sensitivity of the information). Alternatively, the DAME 232 may decide to increase the level of access to further information based on the low level of information previously provided.

In addition, or in other embodiments, the information to be provided to commercial stakeholders (if granted access) may be classified within several levels of sensitivity. For example, the information may be classified with a high, medium, or low sensitivity level. For a high sensitivity level, only very little or no highly confidential data may be given to commercial stakeholders. Thus, even if such measurement information is available, it may be subject to very strict surveillance by the DAME 232 (i.e., the DAME 232 only grants the delivery of the information if it is certain that the recipient of the information has only partial/localized information on the incumbents' resource usage). Such highly confidential data may include, for example, information on the specific location of one or more incumbents' systems (such as shipborne naval radar systems), specific spectrum bands, specific signal patterns (e.g., statistical characteristics over time/frequency, etc.), and/or other confidential information.

For a medium sensitivity level, a controlled level of data of an average confidentiality level can be given to commercial stakeholders. Thus, even if such measurement information is available, it may be subject to surveillance by the DAME 232 (i.e., the DAME 232 only grants the delivery of the information if it is certain that the recipient of the information has only some limited information on the incumbents' resource usage). Such data of an average confidentiality level may include, for example, information on the presence of an incumbent in a larger area (without giving precise location information), long-time-scale statistics on the resource access strategies of the concerned incumbents (e.g., has the incumbent been within a predefined larger zone within a pre-defined larger time frame, etc.), and/or other information.

For a low sensitivity level, data of low confidentiality and of very low sensitivity can be given to commercial stakeholders. However, even if such measurement information is available, it may be subject to some limited surveillance by the DAME 232 (i.e., the DAME 232 may choose to prevent delivery of data of low confidentiality to the commercial stakeholders if large levels of information have already been provided, etc.). Such data of low confidentiality may include information on signal power measurements that cannot be attributed to a specific DoD system, but which could originate from any source.

In one embodiment, the DAME 232 performs the upper classification of data. Measurement devices, such as the sensors 246, 250, 254, 256 shown in FIG. 2B, observe or measure metrics such as power levels over time, frequency, and/or geographic location. The measurement devices inform the DAME 232 about the measurements. Based on the measurements, the DAME 232 determines the corresponding classification level. For example, if an observation is considered to provide insightful details on the operation of the concerned incumbent system, the DAME 232 chooses a high classification level. On the other hand, if an observation is considered to provide little or no insightful details on the operation of the concerned incumbent system, the DAME 232 chooses a lower classification level. In certain embodiments, the classification decisions are made using DAME 232 software as agreed with the incumbents.

It is assumed that for the context of detecting systems under the responsibility of a military or any other (highly) confidential/sensitive system, no (or very limited) information may be available on the applied incumbent's signals. For example, for shipborne naval radar systems, it may be assumed that the applied waveforms are secret and will not be known to (commercial) sensing/measurement equipment. Still, the (commercial) sensing/measurement equipment may identify a differentiation between commercial wireless broadband signals (such as LTE) and the incumbents' signals. For example, in terms of radar systems, a pulse signal may be observed and thus identified as a system that is not corresponding to the typical 2nd-tier or 3rd-tier application (for the SAS case, in the LSA case 2nd-tier corresponds to LSA licensee). Also, the (commercial) sensing/measurement equipment may search for known sequences in known 2nd-tier and/or 3rd-tier signals (for the SAS case - in the LSA case 2nd-tier corresponds to LSA Licensee), e.g., learning symbols in 3GPP, preambles in 3GPP, etc. In this way, (unregistered) other resource users can be identified. That is to say, even if the (commercial) sensing/measurement equipment has no precise information on the signal definition of the incumbents' signals, it may identify (with some level of certainty) whether an observed signal corresponds to a (typical) commercial system or (more likely) to an incumbent.

In one example embodiment, a DAME receives requests for accessing information which are located in distinct databases/repositories. The DAME evaluates the level of knowledge that may be given to the initiator of the request, taking previous requests into account. The DAME gathers the requested information from the relevant distinct and distributed Databases/Repositories and finally provides the information entirely, partly or not at all (depending on the knowledge state of the initiator of the request) to the initiator of the request.

In certain such example embodiments, the requests concern the provision of information on resource usage (typically spectrum usage over time and geographic location) by an incumbent.

In addition, or in other example embodiments, the "level of knowledge that may be given to the initiator of the request" is determined by evaluating the trustfulness of the initiator of the request (by evaluating the history an existing working relationship). For example, the DAME may base its decision on whether there has been a breach of a confidentiality agreement, etc.

In addition, or in other example embodiments, the "level of knowledge that may be given to the initiator of the request" is determined by evaluating the fact whether a sharing agreement and confidentiality guarantees exist (e.g., for 2-tier users in the SAS system or LSA licensees, higher level of knowledge may be granted) or not (e.g., for 3-tier users in the SAS system, lower level of knowledge may be granted).

In another example embodiment, spectrum sharing system equipment accesses the repository/database information. Among an available set of channels, the LSA controller randomly picks one channel and sends a request to the concerned LSA/SAS database/repository (or directly to the DAME) to allow the usage of the channel. If the usage request is granted, the LSA controller triggers the usage of the channel. If the usage request in not granted, the LSA controller picks another channel randomly and reiterates the process until a channel to be used is found or finally all relevant channels turn out to be unavailable to the licensee (or 2-tier, 3-tier users).

In certain such embodiments, the "set of available channels" may be pre-defined by the incumbent, or alternatively, may be communicated by request from the concerned LSA/SAS repository/database upon request or at the first association or through a push mechanism or it is communicated directly by the DAME upon request or at the first association or through a push mechanism which may for example distribute updated information if a change occurs, etc.

In addition, or in other embodiments, the random pick of a channel is performed by using a random variable with possible values ranging from 0 to the maximum channel number. The random variable may be characterized by a constant probability density function over the concerned value range.

FIG. 4 is a block diagram of electronic device circuitry 400 according to certain embodiments. The electronic device circuitry 400 may, for example, be DAME circuitry (which may be or may be part of or incorporated into a DAME), LSA controller circuitry (which may be or may be part of or incorporated into an LSA controller), or some other type of circuitry in accordance with various embodiments. In embodiments, the electronic device circuitry 400 may include radio transmit circuitry 410 and receive circuitry 412 coupled to control circuitry 414. In embodiments, the transmit circuitry 410 and/or receive circuitry 412 may be elements or modules of transceiver circuitry or communication device. The electronic device circuitry 400 may be coupled with one or more plurality of antenna elements 416 of one or more antennas. The electronic device circuitry 400 and/or the components of the electronic device circuitry 400 may be configured to perform operations similar to those described elsewhere in this disclosure.

If the electronic device circuitry 400 is or is part of or incorporated into a DAME, the receive circuitry 412 may receive one or more requests related to information located in one or more information databases or repositories. The control circuitry 414 may evaluate a level of knowledge related to an initiator of a request of the one or more requests. The control circuitry 414 may also gather the requested information from the information databases or repositories. The transmit circuitry 410 may transmit a portion of the information to the initiator of the request, wherein the portion of information is identified based on the level of knowledge related to the initiator of the request.

In certain embodiments where the electronic device circuitry 400 is or is part of or incorporated into a DAME or another entity discussed herein, a database is split into sub-components. The electronic device circuitry 400 limits access to users in order to ensure that any stakeholder may only have partial access to database information. Thus, the electronic device circuitry 400 maintains overall protection of sensitive information.

In certain embodiments where the electronic device circuitry 400 is or is part of or incorporated into a DAME entity, the DAME entity helps to access incumbents' related information with the objective to access incumbents' spectrum while the incumbents' use of the spectrum is absent. Furthermore, the information may also be used to protect tier-2 (including LSA Licensees, SAS PAL) and tier-3 (SAS GAA) users from incumbents high-power emissions. This may be a challenge in the SAS context, for example, where naval shipborne radar systems may have output power levels of up to 92 dBm (e.g., for equivalent isotropically radiated power (EIRP)) and more. The DAME entity may thus be used to inform eNBs, base stations, access points and other entities of the SAS/LSA systems to protect network nodes (eNBs, base stations, access points, user equipment, mobile devices, etc.). This can be performed in a push or pull mechanism. In the pull case, for example, the DAME entity may be contacted for each case individually and information may be provided upon each trigger. In the push case, the DAME entity may automatically (cyclically) provide updated information after an expiration of a (predefined) waiting period. The DAME entity may also provide information conditionally. For example, in case incumbent power levels exceed a certain (predefined) threshold, the provision of information to LSA/SAS equipment may be triggered automatically in order to inform the LSA/SAS equipment and to prevent any damage to the LSA/SAS equipment because of high power incumbent signals (or other incoming signals).

If the electronic device circuitry 400 is or is part of or incorporated into an LSA controller, the transmit circuitry 410 may transmit a first usage request to an LSA or SAS database or repository, or to a DAME, to allow usage of a first channel from a set of available channels. The receive circuitry 412 may receive an indication related to whether the first usage request is granted. The control circuitry 414 may trigger usage of the first channel if the first usage request is granted. The control circuitry 414 may also pick a second channel from the set of available channels if the first usage request is not granted.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the electronic device circuitry may be implemented in, or functions associated with the circuitry may be implemented by, one or more software or firmware modules.

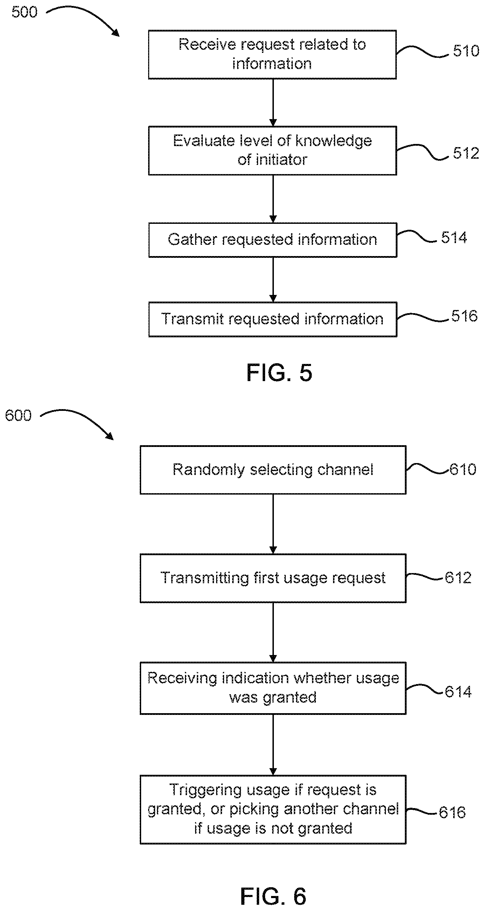

FIG. 5 is a flowchart of a process 500 for licensed shared access management according to one embodiment. The process 500 may be performed by, for example, the electronic device circuitry 400 shown in FIG. 4 configured as, or as part of or incorporated into, a DAME. The process 500 includes receiving 510, by a DAME, one or more requests related to information located in one or more information databases or repositories. The process 500 may further include evaluating 512, by the DAME, a level of knowledge related to an initiator of a request of the one or more requests. The process 500 may further include gathering 514, by the DAME, the requested information from the information databases or repositories. The process 500 may further include transmitting 516, by the DAME, an amount of information that includes some, all, or none of the information to the initiator of the request, wherein the amount of information is identified based on the level of knowledge related to the initiator of the request.

FIG. 6 is a flowchart of a process 600 for licensed shared access management according to one embodiment. The process 600 may be performed by, for example, the electronic device circuitry 400 shown in FIG. 4 configured as, or as part of or incorporated into, an LSA controller. The process 600 may include randomly selecting 610, by an LSA controller, a first channel from a set of available channels. The process 600 may further include transmitting 612, by the LSA controller, a first usage request to an LSA or SAS database or repository, or to a DAME, to allow usage of the first channel. The process 600 may further include receiving 614, by the LSA controller, an indication related to whether the first usage request is granted. The process 600 may further include triggering 616, by the LSA controller, usage of the first channel if the first usage request is granted or picking another channel from the set of available channels if the first usage request is not granted.

### Examples

The following examples pertain to further embodiments.
Example 1 is a database access management entity (DAME) that includes communication circuitry and one or more processors coupled to the communication circuitry. The communication circuitry is to receive a request to access information from one or more distributed databases for shared spectrum in a wireless communication system. The one or more processors is to determine a level of knowledge of an initiator of the request, the level of knowledge corresponding to an incumbent user's use of the shared spectrum and, based on the level of knowledge, determine a subset of information from the one or more databases to provide to the initiator of the request so as to assist the initiator to access the shared spectrum when not in use by the incumbent user. The one or more processors is also to transmit, through the communication circuitry, a grant of the subset of information to the initiator of the request.
Example 2 includes the DAME of Example 1, wherein the one or more distributed databases include a plurality of databases including respective portions of sensitive data. The one or more processors limit access to the sensitive data distributed across the plurality of databases to ensure that a user is granted only partial access to the sensitive data. The subset of information includes an entire set of requested information, a selected portion of the set of requested information, or none of the set of requested information.
Example 3 includes the DAME of any of Examples 1-2, wherein to transmit the grant, the one or more processors are further configured to gather the subset of information from the one or more distributed databases, and transmit (e.g., through the communication circuitry) the subset of information to the initiator of the request.
Example 4 includes the DAME of any of Examples 1-2, wherein to transmit the grant, the one or more processors are further configured to transmit a message to the one or more distributed databases to allow the initiator of the request to access the subset of information.
Example 5 includes the DAME of any of Examples 1-4, wherein the incumbent user's usage of the shared spectrum comprises resource usage by the incumbent user corresponding to at least one of spectrum usage over time and spectrum usage within a geographic location.
Example 6 includes the DAME of any of Examples 1-5, wherein the one or more processors are further configured to determine the subset of information based on a level of trustfulness of the initiator of the request.
Example 7 includes the DAME of Example 6, wherein the level of trustfulness is based on a history of an existing working relationship between the incumbent user and the initiator of the request.
Example 8 includes the DAME of any of Examples 1-7, wherein the one or more processors are further configured to determine the subset of information based on at least one of a sharing agreement and a confidentiality agreement between the incumbent user and the initiator of the request.
Example 9 includes the DAME of any of Examples 1-8, wherein the level of knowledge of the initiator of the request is allowed to be higher for tier-2 users in a spectrum access system (SAS) user or licensed shared access (LSA) licensee as compared to the level of knowledge allowed for tier-3 users in the SAS.
Example 10 includes the DAME of Example 9, wherein the grant of the subset of information is to protect one or more of the tier-2 users or the tier-3 users from the incumbent user's high-power emissions.
Example 11 includes the DAME of Example 10, wherein the one or more processors are further to determine that the incumbent user's high-power emissions exceed a predefined threshold. In response, the one or more processors push an updated subset of information to the initiator of the request to protect against the incumbent user's high-power emissions.
Example 12 includes the DAME of any of Examples 1-11, wherein the one or more processors are further configured to determine the level of knowledge of the initiator of the request based on one or more previous requests from the initiator related to the information.
Example 13 is a licensed shared access (LSA) controller that includes transmit circuitry, receive circuitry, and control circuitry coupled with the receive circuitry and/or the transmit circuitry. The transmit circuitry is to transmit a first usage request to at least one node in a spectrum sharing system. The first usage request is to allow usage of a first channel from among a set of available channels. The receive circuitry is to receive an indication from the at least one node related to whether the first usage request is granted. The control circuitry is to, if the first usage request is granted, trigger usage of the first channel by one or more user equipment (UE). The control circuitry is also to, if the first usage request is not granted, pick a second channel from the set of available channels and send a second usage request to the at least one node to allow usage of the second channel.
Example 14 includes the LSA controller of Example 13, wherein the at least one node comprises one or more distributed LSA repository, one or more distributed spectrum access system (SAS) repository, or an access management entity (DAME).
Example 15 includes the LSA controller of any of Examples 13-14, wherein the control circuitry is configured to randomly select at least one of the first channel and the second channel.
Example 16 includes the LSA controller of Example 15, wherein the control circuitry is configured to randomly select at least one of the first channel and the second channel based on a random variable with possible values ranging from zero to a maximum channel number.
Example 17 includes the LSA controller of Example 16, wherein the random variable is characterized by a constant probability density function over the possible values.
Example 18 includes the LSA controller of any of Examples 13-17, wherein the control circuitry is configured to stop the transmit circuitry from transmission of a subsequent usage request if it is identified that all channels in the set of available channels are unavailable to a licensee, a 2nd tier user, a 3rd tier user, or another user.
Example 19 includes the LSA controller of any of Examples 13-18, wherein the set of available channels is pre-defined by an incumbent user of a frequency band.
Example 20 includes the LSA controller of any of Examples 13-19, wherein the set of available channels is communicated from the at least one node by request, at a first association, or through a push mechanism that distributes updated information if a change occurs.
Example 21 is a spectrum sharing system including a plurality of distributed repositories, a controller, and an access management entity in communication with one or both of the controller and the plurality of distributed repositories. The plurality of distributed repositories is to receive and store information associated with usage of a shared frequency band by an incumbent user. The controller is to control allocation of resources within the shared frequency band by an evolved universal terrestrial radio access network (E-UTRAN) Node B (eNB) for use by a user equipment (UE). The access management entity is to limit access by the controller to the information in the plurality of distributed repositories to prevent a level of knowledge of the incumbent user's usage of the shared frequency band.
Example 22 includes the spectrum sharing system of Example 21, and further includes one or more sensors in communication with each of the plurality of distributed repositories to provide at least a portion of the information associated with the usage of the shared frequency band by the incumbent user.
Example 23 includes the spectrum sharing system of any of Examples 21-22, wherein the controller is configured to: request spectrum availability information from a selected repository of the plurality of distributed repositories, the selected repository based on a geographic location of the UE; and in response, the selected repository sends an authorization request to the access management entity to deliver the availability information to the controller.
Example 24 includes the spectrum sharing system of any of Examples 21-22, wherein the controller is configured to request spectrum availability information directly from the access management entity.
Example 25 includes the spectrum sharing system of any of Examples 21-24, wherein the access management entity is configured to limit the access based on a history of previous requests by the controller.
Example 26 includes the spectrum sharing system of Example 25, wherein the history is associated with one or more parameter selected from a group comprising a geographic area, a time period, and a channel within the shared frequency band.
Example 27 includes the spectrum sharing system of any of Examples 21-26, wherein the access management entity is configured to: determine a subset of information to grant to the controller; gather the subset of information from the plurality of distributed repositories; and transmit the subset of information to the controller.
Example 28 is a method including splitting a database into sub-components. The database includes sensitive data related to an incumbent user's use of spectrum. The method further includes maintaining overall protection of the sensitive data by limiting access to the sub-components of the database to provide that non-incumbent users have only partial access to the sensitive data.
Example 29 includes the method of Example 28, and further includes providing the non-incumbent users with portions of the sensitive data to assist the non-incumbent users to access the spectrum while the incumbent user's use of the spectrum is absent.
Example 30 includes the method of any of Examples 28-29, and further includes using at least portions of the sensitive data to protect the non-incumbent users from emissions by the incumbent users.
Example 31 includes the method of any of Examples 28-30, and further receiving requests for access to the spectrum, and for each request, providing access to a portion of the sensitive data.
Example 32 includes the method of any of Examples 28-30, a further includes periodically pushing an updated portion of the sensitive data to a network node after a predetermined wait period.
Example 33 includes the method of any of Examples 28-32, and further includes: detecting a trigger; and in response to the trigger, pushing an updated portion of the sensitive data to a network node.
Example 34 includes the method of Example 33, wherein detecting the trigger comprises determining that the incumbent user's use of the spectrum exceeds a predetermined power threshold level.
Example 35 is a method, comprising: receiving a request to access information from one or more distributed databases for shared spectrum in a wireless communication system; determining a level of knowledge of an initiator of the request, the level of knowledge corresponding to an incumbent user's use of the shared spectrum; based on the level of knowledge, determining a subset of information from the one or more databases to provide to the initiator of the request so as to assist the initiator to access the shared spectrum when not in use by the incumbent user; and providing a grant of the subset of information to the initiator of the request.
Example 36 includes the method of Example 35, wherein the one or more distributed databases include a plurality of databases comprising respective portions of sensitive data, the method further comprising limiting access to the sensitive data distributed across the plurality of databases to ensure that a user is granted only partial access to the sensitive data.
Example 37 includes the method of any of Examples 35-36, wherein providing the grant comprises: gathering the subset of information from the one or more distributed databases; and transmitting, through communication circuitry, the subset of information to the initiator of the request.
Example 38 includes the method of any of Examples 35-36, wherein providing the grant comprises transmitting a message to the one or more distributed databases to allow the initiator of the request to access the subset of information.
Example 39 includes the method of any of Examples 35-38, wherein the incumbent user's usage of the shared spectrum comprises resource usage by the incumbent user corresponding to at least one of spectrum usage over time and spectrum usage within a geographic location.
Example 40 includes the method of any of Examples 35-39, further comprising determining the subset of information based on a level of trustfulness of the initiator of the request.
Example 41 includes the method of Example 40, wherein the level of trustfulness is based on a history of an existing working relationship between the incumbent user and the initiator of the request.
Example 42 includes the method of any of Examples 35-41, further comprising determining the subset of information based on at least one of a sharing agreement and a confidentiality agreement between the incumbent user and the initiator of the request.
Example 43 includes the method of any of Examples 35-42, further comprising allowing the level of knowledge of the initiator of the request to be higher for tier-2 users in a spectrum access system (SAS) user or licensed shared access (LSA) licensee as compared to the level of knowledge allowed for tier-3 users in the SAS.
Example 44 includes the method of Example 43, wherein the grant of the subset of information is to protect one or more of the tier-2 users or the tier-3 users from the incumbent user's high-power emissions.
Example 45 includes the method of Example 44, further comprising: determining that the incumbent user's high-power emissions exceed a predefined threshold; and in response, pushing an updated subset of information to the initiator of the request to protect against the incumbent user's high-power emissions.
Example 46 includes the method of any of Examples 35-45, wherein the one or more processors are further configured to determine the level of knowledge of the initiator of the request based on one or more previous requests from the initiator related to the information.
Example 47 is a method, comprising: transmitting a first usage request to at least one node in a spectrum sharing system, the first usage request to allow usage of a first channel from among a set of available channels; receiving an indication from the at least one node related to whether the first usage request is granted; if the first usage request is granted, triggering usage of the first channel by one or more user equipment (UE); and if the first usage request is not granted, picking a second channel from the set of available channels and send a second usage request to the at least one node to allow usage of the second channel.
Example 48 includes the method of Example 47, wherein the at least one node comprises one or more distributed LSA repository, one or more distributed spectrum access system (SAS) repository, or an access management entity (DAME).
Example 49 includes the method of any of Examples 47-48, further comprising randomly selecting at least one of the first channel and the second channel.
Example 50 includes the method of Example 49, further comprising randomly selecting at least one of the first channel and the second channel based on a random variable with possible values ranging from zero to a maximum channel number.
Example 51 includes the method of Example 50, further comprising characterizing the random variable by a constant probability density function over the possible values.
Example 52 includes the method of Examples 47-51, further comprising stopping the transmission of a subsequent usage request if it is identified that all channels in the set of available channels are unavailable to a licensee, a 2nd tier user, a 3rd tier user, or another user.
Example 53 includes the method of Examples 47-52, wherein the set of available channels is pre-defined by an incumbent user of a frequency band.
Example 54 includes the method of Examples 47-53, further comprising communicating the set of available channels from the at least one node by request, at a first association, or through a push mechanism that distributes updated information if a change occurs.
Example 55 is a method, comprising: receiving and storing, a plurality of distributed repositories, information associated with usage of a shared frequency band by an incumbent user; controlling allocation of resources within the shared frequency band by an evolved universal terrestrial radio access network (E-UTRAN) Node B (eNB) for use by a user equipment (UE); and limiting access to the information in the plurality of distributed repositories to prevent a level of knowledge of the incumbent user's usage of the shared frequency band.
Example 56 includes the method of Example 55, further comprising sensing at least a portion of the information associated with the usage of the shared frequency band by the incumbent user.
Example 57 includes the method of Examples 55-56, further comprising: requesting spectrum availability information from a selected repository of the plurality of distributed repositories, the selected repository based on a geographic location of the UE; and in response, transmitting an authorization request from the selected repository to an access management entity to deliver the availability information to a controller.
Example 58 includes the method of Examples 55-56, further comprising requesting spectrum availability information directly from an access management entity.
Example 59 includes the method of Examples 55-58, further comprising limiting the access based on a history of previous requests by the controller.
Example 60 includes the method of Example 59, further comprising associating the history with one or more parameter selected from a group comprising a geographic area, a time period, and a channel within the shared frequency band.
Example 61 includes the method of Examples 55-60, further comprising: determining a subset of information to grant to the controller; gathering the subset of information from the plurality of distributed repositories; and transmitting the subset of information to the controller.
Example 62 is at least one computer-readable storage medium having stored thereon computer-readable instructions, when executed, to implement a method as recited in any of Examples 28-61.
Example 64 is an apparatus comprising means to perform a method as recited in any of Examples 28-61.

Various techniques, or certain aspects or portions thereof, may take the form of program code (i.e., instructions) embodied in tangible media, such as floppy diskettes, CD-ROMs, hard drives, a non-transitory computer readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a RAM, an EPROM, a flash drive, an optical drive, a magnetic hard drive, or another medium for storing electronic data. The eNB (or other base station) and UE (or other mobile station) may also include a transceiver component, a counter component, a processing component, and/or a clock component or timer component. One or more programs that may implement or utilize the various techniques described herein may use an application programming interface (API), reusable controls, and the like. Such programs may be implemented in a high-level procedural or an object-oriented programming language to communicate with a computer system. However, the program(s) may be implemented in assembly or machine language, if desired. In any case, the language may be a compiled or an interpreted language, and combined with hardware implementations.

It should be understood that many of the functional units described in this specification may be implemented as one or more components, which is a term used to more particularly emphasize their implementation independence. For example, a component may be implemented as a hardware circuit comprising custom very large scale integration (VLSI) circuits or gate arrays, off-the-shelf semiconductors such as logic chips, transistors, or other discrete components. A component may also be implemented in programmable hardware devices such as field programmable gate arrays, programmable array logic, programmable logic devices, or the like.

Components may also be implemented in software for execution by various types of processors. An identified component of executable code may, for instance, comprise one or more physical or logical blocks of computer instructions, which may, for instance, be organized as an object, a procedure, or a function. Nevertheless, the executables of an identified component need not be physically located together, but may comprise disparate instructions stored in different locations that, when joined logically together, comprise the component and achieve the stated purpose for the component.

Indeed, a component of executable code may be a single instruction, or many instructions, and may even be distributed over several different code segments, among different programs, and across several memory devices. Similarly, operational data may be identified and illustrated herein within components, and may be embodied in any suitable form and organized within any suitable type of data structure. The operational data may be collected as a single data set, or may be distributed over different locations including over different storage devices, and may exist, at least partially, merely as electronic signals on a system or network. The components may be passive or active, including agents operable to perform desired functions.

Reference throughout this specification to "an example" means that a particular feature, structure, or characteristic described in connection with the example is included in at least one embodiment. Thus, appearances of the phrase "in an example" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on its presentation in a common group without indications to the contrary. In addition, various embodiments and examples may be referred to herein along with alternatives for the various components thereof. It is understood that such embodiments, examples, and alternatives are not to be construed as de facto equivalents of one another, but are to be considered as separate and autonomous representations of embodiments.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the invention is not to be limited to the details given herein, but may be modified within the scope and equivalents of the appended claims.

## Claims

1. A database access management entity, DAME (232), comprising:
communication circuitry to receive a request to access information from one or more distributed databases for shared spectrum in a wireless communication system; and
one or more processors coupled to the communication circuitry to:
determine a level of knowledge of an initiator of the request, the level of knowledge corresponding to an incumbent user's use of the shared spectrum; and
based on the level of knowledge, determine a subset of information, the subset of information being a subset from the information requested to be accessed, from the one or more databases to provide to the initiator of the request so as to assist the initiator to access the shared spectrum when not in use by the incumbent user (242; 244; 248; 252);
**characterized in that** the level of knowledge of the initiator of the request is allowed to be higher for tier-2 users having priority access in a spectrum access system, SAS, case or licensed shared access, LSA, case as compared to the level of knowledge allowed for tier-3 users having general authorized access in the SAS, the grant of the subset of information is to protect one or more of the tier-2 users or the tier-3 users from the incumbent user's high-power emissions and that the one or more processors coupled to the communication are further to:
transmit, through the communication circuitry, a grant of the subset of information to the initiator of the request,
determine that the incumbent user's high-power emissions exceed a predefined threshold; and
in response, push an updated subset of information to the initiator of the request to protect against the incumbent user's high-power emissions.

2. The DAME (232) of claim 1 , wherein the one or more distributed databases include a plurality of databases comprising respective portions of sensitive data, wherein the one or more processors limit access to the sensitive data distributed across the plurality of databases to ensure that a user is granted only partial access to the sensitive data, and wherein the subset of information comprises an entire set of requested information, a selected portion of the set of requested information, or none of the set of requested information.

3. The DAME (232) of claim 1 , wherein to transmit the grant, the one or more processors are further configured to:
gather the subset of information from the one or more distributed databases; and
transmit, through the communication circuitry, the subset of information to the initiator of the request.

4. The DAME (232) of claim 1 , wherein to transmit the grant, the one or more processors are further configured to transmit a message to the one or more distributed databases to allow the initiator of the request to access the subset of information.

5. The DAME (232) of any of claims 1 -4, wherein the incumbent user's usage of the shared spectrum comprises resource usage by the incumbent user
corresponding to at least one of spectrum usage over time and spectrum usage within a geographic location.

6. The DAME (232) of any of claims 1 -4, wherein the one or more processors are further configured to determine the subset of information based on a level of trustfulness of the initiator of the request.

7. The DAME (232) of claim 6, wherein the level of trustfulness is based on a history of an existing working relationship between the incumbent user and the initiator of the request.

8. The DAME (232) of any of claims 1 -4, wherein the one or more processors are further configured to determine the subset of information based on at least one of a sharing agreement and a confidentiality agreement between the incumbent user and the initiator of the request.

9. The DAME (232) of any of claims 1 -4, wherein the one or more processors are further configured to determine the level of knowledge of the initiator of the request based on one or more previous requests from the initiator related to the information.

## Patentansprüche

1. Datenbank-Zugriffs-Verwaltungsentität, DAME (232), umfassend:
Kommunikationsschaltung zum Empfangen einer Anfrage zum Zugreifen auf Information von einer oder mehreren verteilten Datenbanken für ein gemeinsames Spektrum in einem drahtlosen Kommunikationssystem; und
einen oder mehrere Prozessoren, die mit der Kommunikationsschaltung gekoppelt sind zum:
Bestimmen eines Wissenslevels eines Initiators der Anfrage, wobei das Wissenslevel einer Benutzung des gemeinsamen Spektrums durch einen amtierenden Benutzer entspricht; und
basierend auf dem Wissenslevel, Bestimmen, von der einen oder den mehreren Datenbanken, eines Subsatzes von Information, wobei der Subsatz von Information ein Subsatz von der Information ist, auf die Zugriff angefragt wurde, der an den Initiator der Anfrage bereitgestellt werde soll, um so den Initiator zum Zugreifen auf das gemeinsame Spektrum, wenn dieses nicht durch den amtierenden Benutzer (242; 244; 248; 252) in Benutzung ist, zu unterstützen;
**gekennzeichnet dadurch, dass** es dem Wissenslevel des Initiators der Anfrage erlaubt ist, höher zu sein für Rang-2 Benutzer, welche Prioritätszugriff in einem Spektrums-Zugriffs-System-, SAS-, Fall oder einem lizensierten-gemeinsamen-Zugriffs-, LSA-, Fall haben, im Vergleich zu dem Wissenslevel, der erlaubt ist für Rang-3 Benutzer, die allgemeinen autorisierten Zugriff in dem SAS haben, wobei die Gewährung des Subsatzes von Information einen oder mehrere Rang-2 Benutzer oder Rang-3 Benutzer vor Hochleistungsemissionen des amtierenden Benutzers schützen soll, und dass der eine oder die mehreren Prozessoren, die mit der Kommunikation gekoppelt sind, ferner:
durch die Kommunikationsschaltung eine Gewährung des Subsatzes von Information an den Initiator der Anfrage übertragen sollen,
bestimmen sollen, ob Hochleistungsemissionen des amtierenden Benutzers eine vordefinierte Schwelle überschreiten; und
als Reaktion, einen aktualisierten Subsatz von Information an den Initiator der Anfrage zum Schützen vor Hochleistungsemissionen des amtierenden Benutzers pushen sollen.

2. DAME (232) nach Anspruch 1, wobei die eine oder die mehreren verteilten Datenbanken eine Vielzahl von Datenbanken beinhalten, die jeweilige Abschnitte vertraulicher Daten umfassen, wobei der eine oder die mehreren Prozessoren Zugriff auf die vertraulichen Daten über die Vielzahl von Datenbanken einschränken um sicher zu stellen, dass einem Benutzers nur teilweisen Zugriff auf die vertraulichen Daten gewährt wird, wobei der Subsatz von Information einen kompletten Satz von angefragter Information, einen ausgewählten Abschnitt des Satzes von angefragter Information, oder keinen des Satzes von angefragter Information umfasst.

3. DAME (232) nach Anspruch 1, wobei der eine oder die mehreren Prozessoren zum Übertragen der Gewährung ferner konfiguriert sind zum:
Sammeln des Subsatzes von Information von der einen oder den mehreren verteilten Datenbanken; und
Übertragen, durch die Kommunikationsschaltung, des Subsatzes von Information an den Initiator der Anfrage.

4. DAME (232) nach Anspruch 1, wobei der eine oder die mehreren Prozessoren zum Übertragen der Gewährung ferner konfiguriert sind zum Übertragen einer Nachricht an die eine oder die mehreren verteilten Datenbanken, um es dem Initiator der Anfrage zu erlauben, auf den Subsatz von Information zuzugreifen.

5. DAME (232) nach einem der Ansprüche 1-4, wobei die Benutzung des gemeinsamen Spektrums durch den amtierenden Benutzer Ressourcenbenutzung durch den amtierenden Benutzer umfasst, die mindestens eines von einer Spektrumsbenutzung im Laufe der Zeit und einer Spektrumsbenutzung innerhalb eines geografischen Orts entspricht.

6. DAME (232) nach einem der Ansprüche 1-4, wobei der eine oder die mehreren Prozessoren ferner konfiguriert sind zum Bestimmen des Subsatzes von Information basierend auf einem Level von Vertrauenswürdigkeit des Initiators der Anfrage.

7. DAME (232) nach Anspruch 6, wobei das Level von Vertrauenswürdigkeit auf einer Historie eines existierenden Arbeitsverhältnisses zwischen dem amtierenden Benutzer und dem Initiator der Anfrage basiert.

8. DAME (232) nach einem der Ansprüche 1-4, wobei der eine oder die mehreren Prozessoren ferner konfiguriert sind zum Bestimmen des Subsatzes von Information basierend zumindest auf einem von einer Sharing-Vereinbarung und einer Vertraulichkeitsvereinbarung zwischen dem amtierenden Benutzer und dem Initiator.

9. DAME (232) nach einem der Ansprüche 1-4, wobei der eine oder die mehreren Prozessoren ferner konfiguriert sind zum Bestimmen des Wissenslevels des Initiators der Anfrage basierend auf einer oder mehreren vorherigen Anfragen von dem Initiator, welche sich auf die Information beziehen.

## Revendications

1. Une entité de gestion d'accès à une base de données, DAME (232), comprenant :
une circuiterie de communication pour recevoir une requête d'accès à des informations provenant d'une ou plusieurs bases de données distribuées pour un spectre partagé dans un système de communication sans fil ; et
un ou plusieurs processeurs couplés à la circuiterie de communication pour :
déterminer un niveau de connaissance d'un initiateur de la requête, le niveau de connaissance correspondant à l'utilisation par un utilisateur actuel du spectre partagé ; et
sur la base du niveau de connaissance, déterminer un sous-ensemble d'informations, le sous-ensemble d'informations étant un sous-ensemble des informations dont l'accès a été requis, à partir des une ou plusieurs bases de données pour le fournir à l'initiateur de la requête de manière à aider l'initiateur à accéder au spectre partagé lorsqu'il n'est pas utilisé par l'utilisateur actuel (242 ; 244 ; 248 ; 252) ;
**caractérisée en ce qu'**il est permis que le niveau de connaissance de l'initiateur de la requête soit supérieur pour des utilisateurs de grade 2 ayant une priorité d'accès dans le cas d'un système d'accès à un spectre, SAS, ou dans le cas d'un accès partagé sous licence, LSA, par rapport au niveau de connaissance permis à des utilisateurs de grade 3 ayant un accès autorisé général dans le SAS, l'attribution du sous-ensemble d'informations est de protéger un ou plusieurs parmi les utilisateurs de grade 2 ou les utilisateurs de grade 3 des émissions à puissance élevée de l'utilisateur actuel, et **en ce que** les un ou plusieurs processeurs couplés à la circuiterie de communication servent en outre à :
transmettre, par le biais de la circuiterie de communication, une attribution du sous-ensemble d'informations à l'initiateur de la requête,
déterminer que les émissions à puissance élevée de l'utilisateur actuel dépassent un seuil prédéfini ; et
en réponse, pousser un sous-ensemble d'informations mis à jour vers l'initiateur de la requête pour le protéger des émissions à puissance élevée de l'utilisateur actuel.

2. La DAME (232) selon la revendication 1, dans laquelle les une ou plusieurs bases de données distribuées incluent une pluralité de bases de données comprenant des portions respectives de données sensibles, dans laquelle les un ou plusieurs processeurs limitent un accès aux données sensibles distribuées dans la pluralité de bases de données pour garantir qu'un utilisateur ne se voie attribuer qu'un accès partiel aux données sensibles, et dans laquelle le sous-ensemble d'informations comprend un ensemble entier d'informations requises, une portion sélectionnée de l'ensemble d'informations requises, ou aucune information de l'ensemble d'informations requises.

3. La DAME (232) selon la revendication 1, dans laquelle pour transmettre l'attribution, les un ou plusieurs processeurs sont en outre configurés pour :
rassembler le sous-ensemble d'informations à partir des une ou plusieurs bases de données distribuées ; et
transmettre, par le biais de la circuiterie de communication, le sous-ensemble d'informations à l'initiateur de la requête.

4. La DAME (232) selon la revendication 1, dans laquelle pour transmettre l'attribution, les un ou plusieurs processeurs sont en outre configurés pour transmettre un message aux une ou plusieurs bases de données distribuées pour permettre à l'initiateur de la requête d'accéder au sous-ensemble d'informations.

5. La DAME (232) selon l'une des revendications 1 à 4, dans laquelle l'usage par l'utilisateur actuel du spectre partagé comprend un usage de ressources par l'utilisateur actuel correspondant à au moins un usage de spectre au fil du temps et un usage de spectre à un emplacement géographique.

6. La DAME (232) selon l'une des revendications 1 à 4, dans laquelle les un ou plusieurs processeurs sont en outre configurés pour déterminer le sous-ensemble d'informations sur la base d'un niveau de confiance de l'initiateur de la requête.

7. La DAME (232) selon la revendication 6, dans laquelle le niveau de confiance est basé sur un historique d'une relation de travail existante entre l'utilisateur actuel et l'initiateur de la requête.

8. La DAME (232) selon l'une des revendications 1 à 4, dans laquelle les un ou plusieurs processeurs sont en outre configurés pour déterminer le sous-ensemble d'informations sur la base d'au moins un parmi un accord de partage et un accord de confidentialité entre l'utilisateur actuel et l'initiateur de la requête.

9. La DAME (232) selon l'une des revendications 1 à 4, dans laquelle les un ou plusieurs processeurs sont en outre configurés pour déterminer le niveau de connaissance de l'initiateur de la requête sur la base d'une ou plusieurs requêtes précédentes provenant de l'initiateur quant aux informations.
